# EUROPÄISCHE PATENTANMELDUNG

(11) **EP 0 909 739 A2**
(43) Veröffentlichungstag der Anmeldung: **21.04.1999**
(21) Anmeldenummer: 98111925.8
(22) Anmeldetag: 27.06.1998
(51) Int. Cl.: C02F 1/76, C02F 1/461

(54) **Elektrolyseanlage zur Herstellung einer wässrigen Natriumhypochloritlösung**

(30) Priorität: 17.10.1997 DE 29718331 U
(71) Anmelder: Dinotec GmbH, 63477 Maintal (DE)
(72) Erfinder: Schminke, Dieter, 60598 Frankfurt am Main (DE); Gerhardt, Wolfgang, 63579 Freigericht 3 (DE)
(74) Vertreter: KEIL & SCHAAFHAUSEN

(57) **Zusammenfassung**

Eine Elektrolyseanlage zur Herstellung einer wäßrigen Natriumhypochloritlösung, insbesondere zur Entkeimung von Schwimmbadwasser, weist eine Membran-Elektrolysezelle (13) zur Herstellung von Natronlauge und Chlorgas aus Sole und Wasser, einen Reaktionsturm (14), dem die Natronlauge und das Chlorgas zugeführt werden und in dem hieraus Natriumhypochloritlösung hergestellt wird, und einen Vorratstank (4) auf, in den die Natriumhypochloritlösung überführt wird, bevor sie über Dosierpumpen (19, 19') dem Schwimmbadwasser zugeführt wird, wobei die Membran-Elektrolysezelle (13), der Reaktionsturm (14) und der Vorratstank (4) zu einer Einheit zusammengefaßt sind.

## Beschreibung

Die Erfindung betrifft eine Elektrolyseanlage zur Herstellung einer wäßrigen Natriumhypochloritlösung, insbesondere zur Entkeimung von Schwimmbadwasser.

Zur Desinfektion von Trink- und Badewasser und zur Vermeidung von Keimübertragungen wird Chlor in verschiedenen Lieferformen eingesetzt. Üblicherweise wird in Großanlagen vorzugsweise mit Chlorgas und in kleineren Anlagen mit Natrium- oder Calciumhypochlorit gearbeitet. Der Umgang mit diesen Stoffen setzt strenge Sicherheitsvorkehrungen voraus, um Gefahren für das Betriebspersonal und die Badegäste zu vermeiden.

Alle Handelsformen von Chlor basieren zunächst auf Chlorgas. In großtechnischen Verfahren wird Chlorgas durch Elektrolyse aus natürlichem Kochsalz und elektrischem Strom hergestellt. Ähnlich wie bei diesen großtechnischen Verfahren, kann auch am Verwendungsort eine hochaktive Chlorlösung durch Elektrolyse hergestellt werden. Ein besonders preiswertes und sicheres Verfahren zur Erzeugung des notwendigen Desinfektionsmittelbedarfes am Verwendungsort ist die Membranzellentechnologie.

Aus der DE 296 13 126 U1 ist ein Elektrolysegerät zur Herstellung einer Desinfektionslösung aus Kochsalz nach dem Membranzellenverfahren bekannt, bei dem in einer Elektrolysezelle aus Kochsalzsole eine Desinfektionslösung hergestellt wird. Die hierbei entstehende Ablauge (Magersole) wird in die Kanalisation abgeführt. Das bekannte Elektrolysegerät ist mit der Schwimmbadumwälzung gekoppelt, so daß durch die erforderliche Drosselung der Umwälzleistung Energie vernichtet wird. Auch weist das bekannte Elektrolysegerät eine Vielzahl separater Bauteile, nämlich wenigstens das eigentliche Elektrolysegerät mit Elektrolysezelle, Enthärter etc., einen separaten Salzlösebehälter sowie eine in einem separaten Gehäuse untergebrachte Steuer- und Leistungseinheit auf. Hierdurch wird aber der Installationsaufwand für ein Schwimmbad relativ groß.

Aufgabe der Erfindung ist es daher, den Installationsaufwand für ein Schwimmbad und den für die Desinfektion des Schwimmbadwassers notwendigen Energieaufwand zu reduzieren.

Diese Aufgabe wird mit der Erfindung durch eine Elektrolyseanlage zur Herstellung einer wäßrigen Natriumhypochloritlösung gelöst, die eine Membran-Elektrolysezelle zur Herstellung von Natronlauge und Chlorgas aus Sole und Wasser, einen Reaktionsturm, dem die Natronlauge und das Chlorgas zugeführt werden und in dem hieraus Natriumhypochloritlösung hergestellt wird, und einen Vorratstank aufweist, in den die Natriumhypochloritlösung überführt wird, bevor sie über Dosierpumpen dem Schwimmbadwasser zugeführt wird, wobei die Membran-Elektrolysezelle, der Reaktionsturm und der Vorratstank zu einer Einheit zusammengefaßt sind.

Durch eine derart kompakte Anlage wird eine einfache Installation im Schwimmbad ermöglicht. Der integrierte Vorratstank ermöglicht es, über Dosierpumpen eines oder mehrere Becken zu bedienen, wobei die Desinfektionslösung immer frisch hergestellt wird, aber dennoch ein genügend großer Vorrat vorhanden ist, um auch Bedarfsspitzen - zum Beispiel bei extremer Badbelastung - abdecken zu können. Die Kompaktelektrolyseanlage ist nicht mit der Schwimmbadumwälzung gekoppelt, sondern produziert abhängig vom Füllvolumen im Desinfektionsmittel-Vorratsbehälter. So steht jederzeit eine ausreichende Menge an Desinfektionslösung zur Verfügung und es können mit einer Anlage mehrere Kreisläufe bedient werden. Durch die Verwendung von Dosierpumpen entfällt die energievernichtende Drosselung der Schwimmbadumwälzleistung. Gleichzeitig wird durch den Einsatz moderner Zellentechnik (Membrantechnologie) der Energieeinsatz bei der Herstellung der Desinfektionslösung minimiert.

Gemäß einer bevorzugten Ausgestaltung der Erfindung sind die Elemente zur Herstellung der Sole und der Natriumhypochloritlösung, wie Membran-Elektrolysezelle, Reaktionsturm, Enthärter, Versorgungspumpen oder dergleichen, auf einer Montageplatte vormontiert.

In Weiterbildung dieses Erfindungsgedankens weist die Elektrolyseanlage einen wannenförmigen Behälter auf, der durch eine Trennwand in einen Soletank und einen Vorratstank für die Natriumhypochloritlösung unterteilt wird, wobei die Montageplatte in den Behälter einschiebbar ist. Hierdurch wird einerseits der Platzbedarf für die Bevorratung sowohl der Salzsole als auch der Natriumhypochloritlösung minimiert. Gleichzeitig wird aber auch die Reparatur und Wartung der Elektrolyseanlage erleichtert, da sämtliche zu wartenden Elemente auf der entnehmbaren Montageplatte angeordnet sind, so daß sie losgelöst von den Vorratsbehältern zugänglich sind.

Gemäß einem weiteren Erfindungsgedanken wird die bei der Herstellung der Natronlauge entstehende Magersole in den Soletank zurückgeführt, so daß einerseits Ablauge vermieden und andererseits eine 100%-ige Salzausbeute ermöglicht wird. Das eingesetzte Salz wird nahezu stöchiometrisch in aktives Chlor umgesetzt. Die bei bekannten Elektrolyseanlagen erfolgende Belastung der Kanalisation durch Ablauge wird vermieden.

Zur Erhöhung der Anlagensicherheit ist erfindungsgemäß außerdem vorgesehen, daß die Membran-Elektrolysezelle vollständig in Wasser eingetaucht ist. Eventuell aus der Membran-Elektrolysezelle austretendes Chlorgas wird im Wasser gelöst und reichert lediglich die Natriumhypochloritlösung an.

Die Elektrolyseanlage kann in herkömmlicher Weise über einen Schaltschrank mit Steuerung und Leistungsteil angesteuert werden, gemäß einer bevorzugten Ausführungsform der Erfindung ist jedoch vorgesehen, die Steuerung über einen vorzugsweise an der Montageplatte angeordneten Mikroprozessor durchzuführen. Hierbei wird der erfindungsgemäße Gedanken einer kompakten Anlage vollständig umgesetzt.

Weitere Ziele, Vorteile und Anwendungsmöglichkeiten der Erfindung ergeben sich aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:

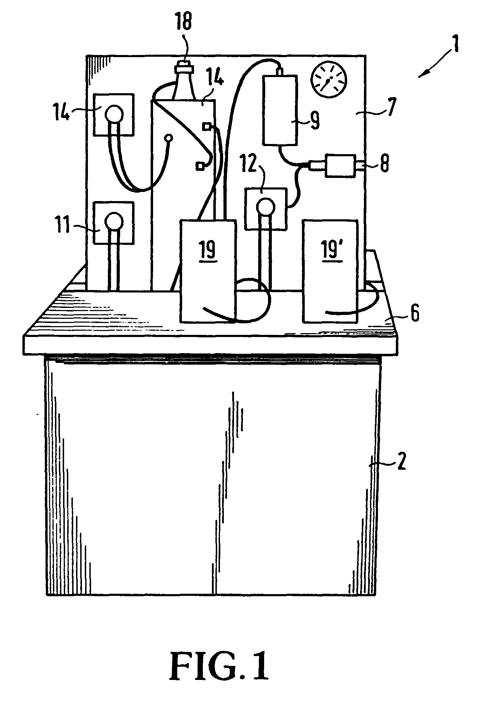

- Fig. 1: schematisch eine perspektivische Ansicht der erfindungsgemäßen Elektrolyseanlage,

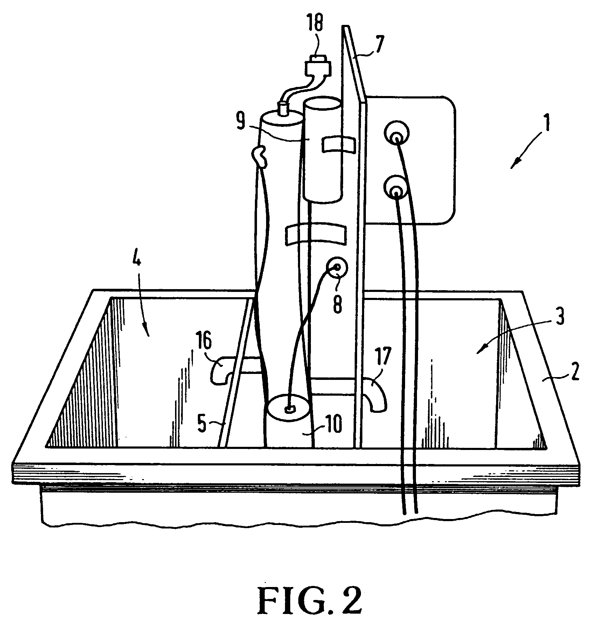

- Fig. 2: schematisch eine Vorderansicht der Elektrolyseanlage gemäß Fig. 1 mit auf dem Vorratstank angeordneter Abdeckung und Darstellung der Dosierpumpen und

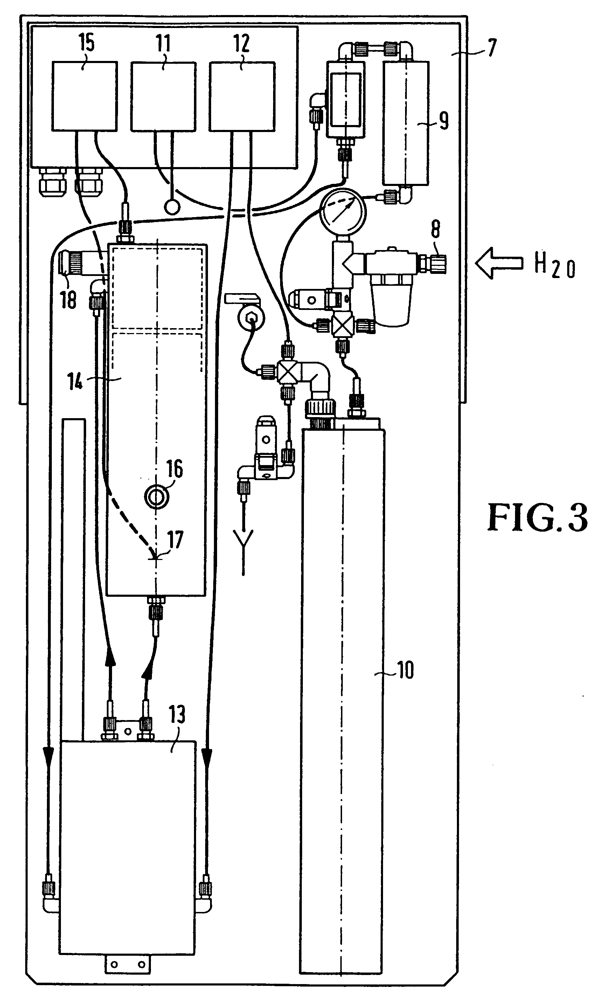

- Fig. 3: eine schematische Vorderansicht der Montageplatte mit den Elementen zur Herstellung der Natriumhypochloritlösung.

Die erfindungsgemäße Elektrolyseanlage 1 weist einen wannenförmigen Behälter 2 mit einem Soletank 3 und einem Vorratstank für das zu erzeugende Desinfektionsmittel (Natriumhypochloritlösung) auf, die über eine Trennwand 5 voneinander getrennt sind. Die Tanks 3, 4 lassen sich über einen Deckel 6 schließen.

In den Behälter 2 ist eine Montageplatte 7 einschiebbar, auf der die Elemente zur Erzeugung der wäßrigen Natriumhypochloritlösung angeordnet sind. Über einen Versorgungswasseranschluß 8, der mit Trink- oder Schwimmbadwasser gespeist werden kann, wird Versorgungswasser ggf. nach vorheriger Filterung in einer Filtereinheit 9 zunächst einem Enthärter 10 zugeführt. Unabhängig davon wird in dem Soletank 3 aus Kochsalz (insbesondere als Tablettensalz) und Wasser eine Salzsole hergestellt. Das Versorgungswasser und die Salzsole werden über entsprechende Versorgungspumpen 11, 12 einer Membran-Elektrolysezelle 13 zugeführt, in der in zwei verschiedenen Kammern (vor bzw. hinter der Membran) Chlorgas und Natronlauge erzeugt werden. Die Membran-Elektrolysezelle 13 ist vollständig in Wasser eingetaucht, so daß eventuell entweichendes Chlorgas lediglich die Natriumhypochloritlösung anreichert, aber nicht nach außen austritt. Zur Sicherheit kann dennoch ein Chlorgaswarngerät vorgesehen sein. Das Chlorgas und die Natronlauge werden dann zusammen mit dem frei werdenden Wasserstoff und der Magersole einem Reaktionsturm 14 zugeführt, in dem mit Hilfe von elektrischem Strom Natriumhypochlorit (vorzugsweise ca. 2%-ige Aktivchlorlösung) erzeugt wird. Unter Nutzung einer geringen Menge Natronlauge, die über eine Versorgungspumpe 15 zugeführt werden kann, wird hierbei das Chlorgas von der Magersole getrennt. Das sich ergebende Produkt (Natriumhypochlorit) wird über einen Auslaß 16 in den Vorratstank 4 überführt. Die Magersole wird über einen zweiten Auslaß 17 in den Magersoletank 3 zurückgeführt, um den Salzkreislauf zu schließen und eine maximale (100%-ige) Salzausbeute zu erreichen. Die Wasserstoffentgasung erfolgt über eine stetig aufsteigend verlaufende Wasserstoffableitung 18. Aus dem Vorratstank 4 wird die Natriumhypochloritlösung über Dosierpumpen 19, 19' je nach Bedarf einem oder mehreren Becken zugeführt. Die Steuerung der Elektrolyseanlage 1 erfolgt vorzugsweise über eine ebenfalls an der Montageplatte 7 angeordnete (nicht dargestellte) Mikroprozessorsteuerung. Es ist jedoch auch möglich, hierzu einen herkömmlichen Schaltschrank vorzusehen. Die Dimensionierung der Dosierpumpen 19, 19' wird hierbei so gewählt, daß auch kurzfristig auftretende Bedarfsspitzen abgedeckt werden können. Parallel zu der Chlorlösung wird in der Anlage 1 auch Aktivsauerstoff erzeugt, der zusätzlich zur optimalen Desinfektion des aufbereiteten Wassers beiträgt.

Die vorzugsweise für Schwimmbäder mit einer stündlichen Umwälzleistung von bis zu 100 m³ (Erzeugerklasse unter 200 g/Std.) vorgesehene Elektrolyseanlage 1 läßt sich als kompakte Anlage im Schwimmbad installieren, wodurch der Installationsaufwand erheblich reduziert wird. Da die Chlorung der Schwimmbecken aus dem Vorratstank 4 heraus erfolgt, ist immer ein genügend großer Vorrat an Natriumhypochloritlösung vorhanden, um auch Bedarfsspitzen abdecken zu können. Hierbei wird der Energieeinsatz minimiert, da die Elektrolyseanlage 1 nicht mit der Schwimmbadumwälzung gekoppelt ist, sondern abhängig vom Füllvolumen im Desinfektionsmittel-Vorratsbehälter 4 produziert. Gleichzeitig wird eine 100%-ige Salzausbeute erreicht und eine Ableitung von Ablauge in die Kanalisation vermieden.

### Bezugszeichenliste:

- 1: Elektrolyseanlage
- 2: Behälter
- 3: Soletank
- 4: Vorratstank für Natriumhypochlorit
- 5: Trennwand
- 6: Deckel
- 7: Montageplatte
- 8: Versorgungswasseranschluß
- 9: Filtereinheit
- 10: Enthärter
- 11: Versorgungspumpe
- 12: Versorgungspumpe
- 13: Membran-Elektrolysezelle
- 14: Reaktionsturm
- 15: Versorgungspumpe
- 16: Auslaß (Chlorlösung)
- 17: Auslaß (Magersole)
- 18: Wasserstoffgasableitung
- 19, 19': Dosierpumpen

## Patentansprüche

1. Elektrolyseanlage zur Herstellung einer wäßrigen Natriumhypochloritlösung, insbesondere zur Entkeimung von Schwimmbadwasser, mit einer Membran-Elektrolysezelle (13) zur Herstellung von Natronlauge und Chlorgas aus Sole und Wasser, einem Reaktionsturm (14), dem die Natronlauge und das Chlorgas zugeführt werden und in dem hieraus Natriumhypochloritlösung hergestellt wird, und mit einem Vorratstank (4), in den die Natriumhypochloritlösung überführt wird, bevor sie über Dosierpumpen (19, 19') dem Schwimmbadwasser zugeführt wird, wobei die Membran-Elektrolysezelle (13), der Reaktionsturm (14) und der Vorratstank (4) zu einer Einheit zusammengefaßt sind.

2. Elektrolyseanlage nach Anspruch 1, **dadurch gekennzeichnet,** daß die Elemente zur Herstellung der Sole und der Natriumhypochloritlösung, die Membran-Elektrolysezelle (13), Reaktionsturm (14), Enthärter (10), Versorgungspumpen (11, 12, 15) etc. auf einer Montageplatte (7) vormontiert sind.

3. Elektrolyseanlage nach Anspruch 2, **gekennzeichnet durch** einen wannenförmigen Behälter (2), der durch eine Trennwand (5) in einen Soletank (3) und den Vorratstank (4) für die Natriumhypochloritlösung unterteilt wird, wobei die Montageplatte (7) in den Behälter (2) einschiebbar ist.

4. Elektrolyseanlage nach einem der Ansprüche 1 bis 3, **dadurch gekennzeichnet,** daß die bei der Herstellung der Natronlauge entstehende Magersole in den Soletank (3) zurückgeführt wird.

5. Elektrolyseanlage nach einem der Ansprüche 1 bis 4, **dadurch gekennzeichnet,** daß die Membran-Elektrolysezelle (13) vollständig in Wasser eingetaucht ist.

6. Elektrolyseanlage nach einem der Ansprüche 1 bis 5, **gekennzeichnet durch** eine Mikroprozessorsteuerung.
